Europäisches Patentamt

European Patent Office

Office européen des brevets

(19)

(11) Publication number: **0 155 808**

**A2**

(12) # EUROPEAN PATENT APPLICATION

(21) Application number: **85301685.5**

(22) Date of filing: **12.03.85**

(51) Int. Cl.⁴: **B 62 K 25/02**

(30) Priority: **12.03.84 US 588193**

(43) Date of publication of application:
**25.09.85 Bulletin 85/39**

(84) Designated Contracting States:
**DE FR GB IT NL**

(71) Applicant: Tsai, Chao-Hsiung
15, Lane 138, Chung-San Rd. Sec.1
Pei-Tou Chen Chang-Hwa Hsien(TW)

(72) Inventor: Tsai, Chao-Hsiung
15, Lane 138, Chung-San Rd. Sec.1
Pei-Tou Chen Chang-Hwa Hsien(TW)

(74) Representative: Alexander, Thomas Bruce et al,
Boult, Wade & Tennant 27 Furnival Street
London EC4A 1PQ(GB)

(54) Axle-variating means for a concentric and eccentric wheel.

(57) An axle-variating means includes a hub(12) formed with an axle-adjusting groove (1) and an axle (2) variably fixed in the groove (1) to change the axis (11) of a vehicle wheel connected to the hub so as to drive the wheel either for a concentric rotation or an eccentric rotation to interestingly imitate a horse-ride action.

FIG.1

Axle-variating Means for a Concentric and Eccentric Wheel

Conventional bicyle is used as a traffic tool or sporting equipment. The movement of a conventional bicycle is driven along an absolutely centered wheel, which is circularly moved and not cam-like moved. Hence, the traditional circular movement of the bicycle wheel will be easily bored by the bicycle riders or players. If a more exciting way like riding on a horse can be applied on the bicycle, the interest of the bicycle player will then be much spurred.

The present inventor has found this matter and invented the present axle-variating means for cam-like wheel.

According to the present invention there is provided an axle-variating means for a vehicle wheel, wherein the wheel hub is formed with an axle-adjusting groove and the tubular axle of the wheel sprocket can be variably fixed in the axle-adjusting groove to change the axis of a vehicle wheel so as to drive the wheel in an eccentric movement to imitate a horse-ride action and to much increase the rider's interest.

--1--

The present invention will be further described with reference to the accompanying drawings, in which:-

Figure 1 is a front elevation of the present invention.

Figure 2 is a perspective drawing of the tubular axle of the present invention.

Figure 3 is a side-view sectional drawing of the present invention.

Figure 4 is a perspective illustration showing the application of the present invention on a bicycle.

Figure 5 is a front elevation of another preferred embodiment of the present invention.

Figure 6 is a perspective drawing of another preferred axle of the present invention.

Figure 7 is a side-view sectional drawing of Figure 5.

Figure 8 is a front elevation of still another preferred embodiment of the present invention.

Figure 9 is a perspective drawing of still another axle of Figure 8.

Figure 10 is a side-view sectional drawing of Figure 8.

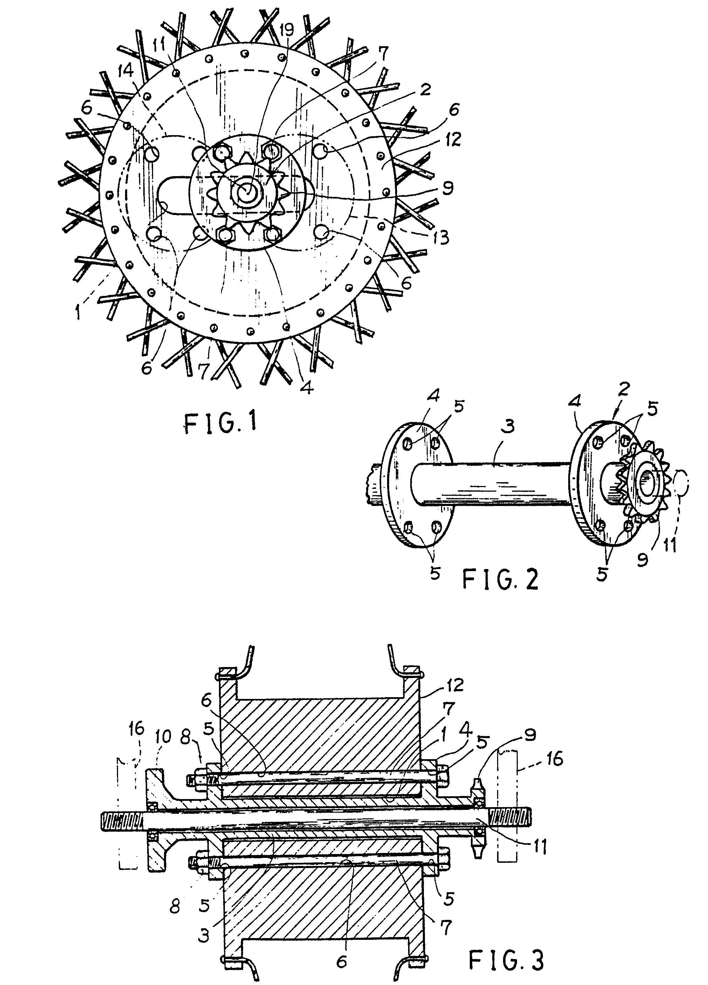

As shown in Figures 1, 2, and 3, the present invention comprises: a hub 12 which is formed with an unsymmetrical lengthy groove 1 from hub axis 19 through the thickness of hub 12 and is drilled with several sets of bolt holes 6, each set having four bolt holes; an axle 2 including a tubular axle 3, two flanges 4 disposed on opposite sides of axle 3 and separated in a distance equal to the thickness of hub 12, each flange 4 being drilled with four bolt holes 5 corresponding

--2--

to the bolt holes 6 formed on hub 12, a brake drum 10 terminated on one end of axle 3 and a sprocket 9 terminated on another end of axle 3, axle 2 being selectively fixed on hub 12 by four nuts 8 and bolts 7 through bolt holes 6, 5; and a pivot axis 11 passing through the tubular hole of axle 3 for pivotting axle 2, and fixed on the bottom fork 16. In order to fix axle 2 on hub center for a normal bicycle, at least one set of bolt holes 6 should be centrally positioned around the axis 19 of hub 12.

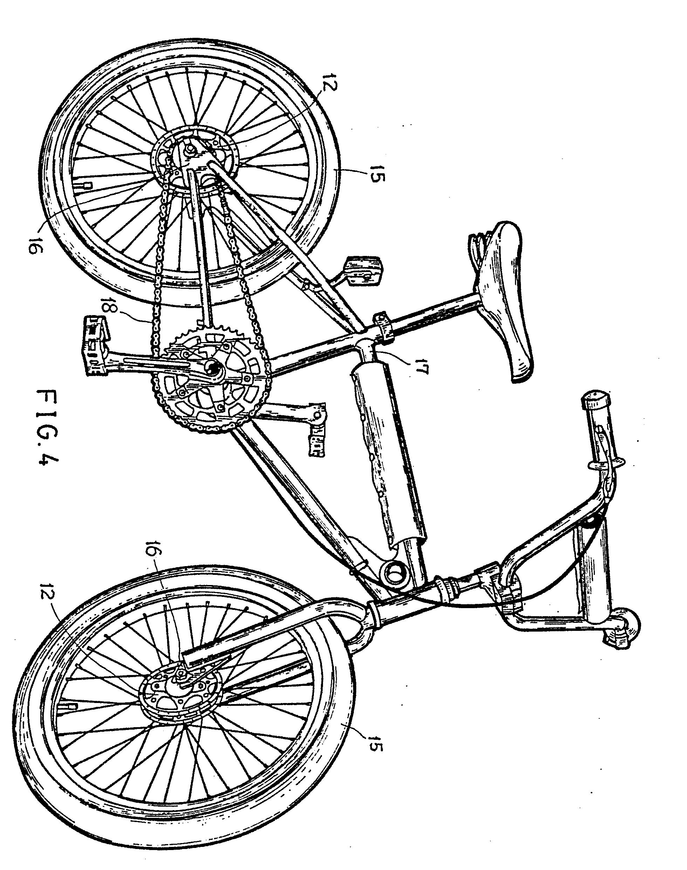

When using the present invention to imitate a horse-ride action, the axle 2 may be fixed on the dotted-line position either at numeral 13 or 14. The axle 2 is moved along the groove 1 for selective adjustment of axle position on hub 12. Since the axles 2, 11 are driven by chain 18 if mounting the wheel 15 of the present invention on a fork 16 connected to cross bar 17 of a bicycle as Figure 4 shown. By rotating the sprocket 9, the hub 12 will be rotated in an eccentric movement to imitate a horse-ride action. The present invention may be applied either in rear wheel or front wheel. Since the pivot axis 11 is definitely fixed on the bottom fork 16, the length of such chain 18 is a constant without being influenced by the position of axle 2 on hub 12.

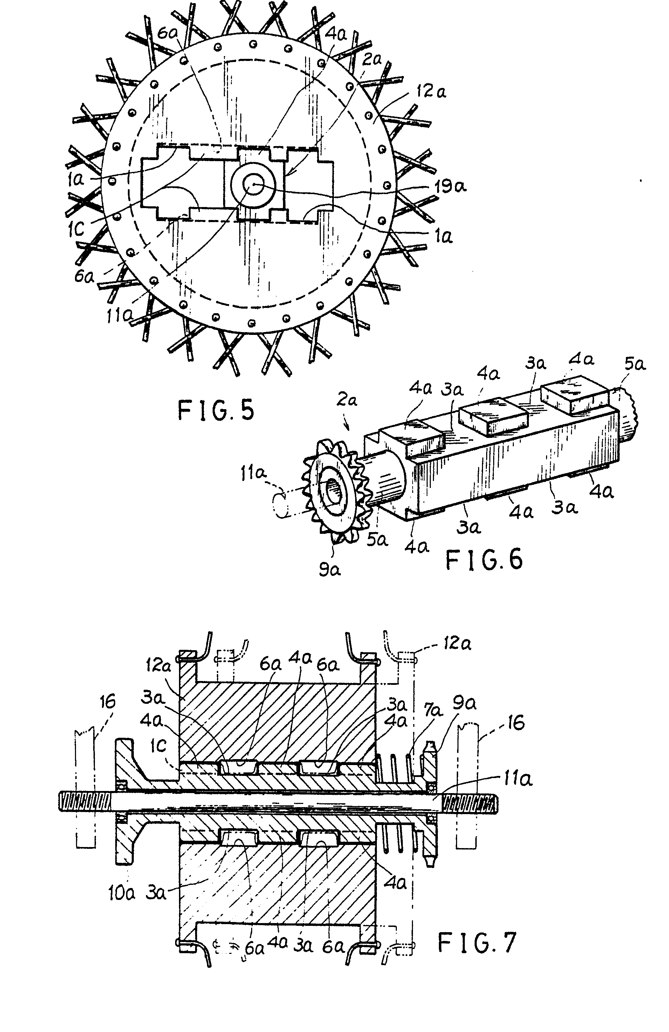

Another preferred embodiment of the present invention is shown in Figures 5 - 7, which comprises: a hub 12a which is formed with several cross grooves 1a excavated through the thickness of hub 12a, all grooves 1a being communicated with one another and unsymmetrically developed from the hub axis 19a; an axle 2a including a tubular axle 5a which is centrally formed with a cross-block portion 4a and terminated with a sprocket 9a; and a pivot axis 11a passing through the tubular hole of axle 5a for pivotting axle 2a and fixed on the bottom fork 16 or a vehicle frame.

The cross-block portion 4a of axle 2a is averagely formed with several recesses 3a on opposite surfaces contacting the cross groove 1a of hub 12a. The extension portion 1c as spaced between the two neighbouring cross grooves 1a is averagely formed with several recesses 6a corresponding to the recesses 3a. Hub 12a is normally retained by a compression spring 7a as backed by the sprocket 9a to allow the cross-block portion 4a to engage with the cross groove 1a against the extension portion 1c so that when driving the sprocket 9a, the hub 12a with wheel may be synchronously driven.

The axle 2a as Figure 5 shown is sharply located at the axis 19a of hub 12a so that the rotation of wheel is normal. If an eccentric rotation is required, the hub 12a is pushed to the position as dotted-line shown in Figure 7, whereby the cross-block portion 4a is no longer obstructed by the extension portion 1c and is freely moved along the recesses 6a as dotted-line shown in Figure 5 to the specific position aside the axis 19a, the pushing force is then released to restore the spring 7a to re-engage the cross-block portion 4a with the cross groove 1a against the extension port 1c for synchronous rotation of hub 12a with axle 2a.

--4--

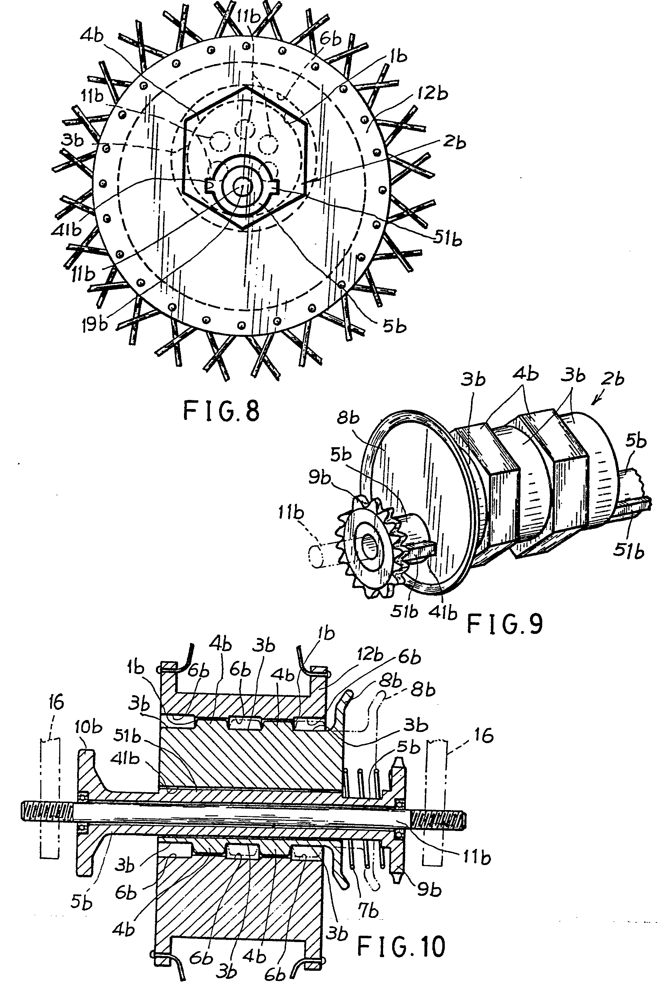

still another preferred embodiment of the present invention is shown in Figures 8-10, which comprises: a hub 12b which is eccentrically formed with a polygonal hole 1b across the thickness of hub 12b from the axis 19b, several cylindrical-hole portions 6b being averagely formed on the polygonal hole 1b; an axle 2b which is formed with a polygonal column 4b, averagely formed with several cylindrical recesses 3b and slidingly mounted on a tubular axle 5b, to engage with the polygonal hole 1b of hub 12b; and a pivot axis 11b passing through the tubular hole of tubular axle 5b having a sprocket 9b for pivotting axle 2b and fixed on the bottom fork 16. A compression spring 7b is inserted between a disk 8b terminated on the polygonal column 4b and the sprocket 9b terminated on axle 5b to retain the hub 12b to engage with axle 2b. The polygonal column 4b is normally engaged with the polygonal hole 1b of hub 12b for synchronous driving of both hub 12b with axle 2b. A lengthy extension 51b is formed on tubular axle 5b and is engaged with a lengthy groove 41b formed on the polygonal column 4b so as to allow the reciprocative sliding of polygonal column 4b along the tubular axle 5b. The diameter of cylindrical hole 6b should be slightly larger than the diagonal line of the polygonal hole 1b.

When using the present invention for normal driving, the axle 2b is fixed into polygonal hole 1b to coincide the axis of axle 2b with the axis 19b of hub 12b. In case an eccentric movement is required, the disk 8b is pulled against the resilience of spring 7b to disengage the column 4b from hole 1b to the position as dotted line shown in Figure 10 so that the polygonal column 4b may slide into

the cylindrical-hole portion 6b for free rotation of hub 12b until the specific position is found. For instance, the axis 11b may be moved to any dotted-line position as Figure 8 shown to be eccentric from the axis 19b for eccentric rotation of hub 12b and the wheel. Once releasing the pulling force for disk 8b, the compression spring 7b will retain column 4b to engage with polygonal hole 1b of hub 12b for synchronous movemnt of both axle 2b and hub 12b. The polygonal hole is preferably a hexagonal hole in this invention.

The present invention has the following acvantages:

1. The axle may be concentrically or eccentrically fixed in the hub for normal circular rotation or eccentric rotation for much economic uses.

2. If the hub is rotated eccentrically, the vehicle such as bicycle can be driven like a horse-ride to spur the user's interest.

3. The eccentric movement will let the vehicle rider up and down to physically train the rider.

4. If applying the present invention to a vehicle having triple or quadruple wheels, a more interesting tool can be achieved like a space car or a sea boat.

The polygonal hole 1b may be made as an internal gear (not shown) and the polygonal column 4b may be made as a gear engaged within said internal gear.

CLAIMS:

1.   An axle-variating means for a vehicle wheel, characterised in that the wheel hub (12) is formed with an axle-adjusting groove (1) and the tubular axle (3) of the wheel sprocket (9) can be variably fixed in the axle-adjusting groove to change the axis of a vehicle wheel so as to drive the wheel in an eccentric movement to imitate a horse-ride action and to much increase the rider's interest.

2.   An axle-variating means as claimed in Claim 1 for a concentric and eccentric wheel and characterised by having in combination:  a hub (12) formed with an unsymmetrical lengthy groove (1) from the axis (19) of said hub by excavating through the thickness of said hub, and drilled with several sets of bolt holes (6) therethrough, each set having four bolt holes;
an axle (2) including a tubular axle (3) passing said lengthy groove and formed with two flanges (4) on opposite sides of said tubular axle, both flanges separated in a distance equal to the thickness of said hub and each flange being drilled with four bolt holes (5) corresponding to said bolt holes (6) on said hub, and a sprocket (9) terminated on one end of said tubular axle; and
a pivot axis (11) passing through a tubular hole of said tubular axle (3) for pivotting said axle (2) thereon and fixed on the vehicle frame or bottom fork of a bicycle, whereby said flanges (4) can be fixed on said hub by four nuts (8) and bolts (7) passing through said flanges and
bolt holes formed through said hub to coincide said pivot
axis (11) with the axis (19) of said hub for concentric
rotation of said hub, and may also be fixed aside said axis
(19) of said hub for eccentric rotation of said hub.

3. An axle-variating means as claimed in Claim 1 and
characterised by having in combination:
a hub (12a) formed with several cross grooves (1a) excavated
through the thickness of said hub (12a) said cross grooves
(1a) communicated with one other and unsymmetrically
developed from the hub axis (19a);
an axle 2a including a tubular axle which is centrally
formed with a cross-block portion (4a) engaged with either
said cross groove (1a) on said hub and terminated with a
sprocket (9a); and
a pivot axis (11a) passing through the tubular hole of said
axle (5a) and fixed on the vehicle frame, whereby said axle
may be concentrically or eccentrically engaged with said
hub by fixing said cross-block portion (4a) of said axle in
a specific cross groove (1a) on said hub.

4. An axle-variating means according to Claim 3
characterised in that several extension portions (1c) are
each spaced between the two neighbouring cross grooves (1a),
each being averagely formed with several recesses (6a), and
said cross-block portion (4a) of said axle (2a) is
averagely formed with several recesses (3a) to correspond
said recesses (6a) of said extension portion (1c), whereby

said hub (12a) as retained by a compression spring (7a) backed by said sprocket (9a) terminated on said axle (2a) to allow said cross-block portion (4a) to engage with

said cross grooves (1a) of said hub against said extension

portion (1c) between two said cross grooves (1a) and said

hub (12a) can be pushed to disengage from said axle (2a) so as to freely move said hub by passing said extension

portion (1c) of said hub through said recess (3a) on said cross-block portion (4a) of said axle until an eccentric position is found.


5.    An axle-variating means as claimed in Claim 1 for a concentric and eccentric wheel characterised by having in combination:

a hub (12a) eccentrically formed with a polygonal hole (1b)

across the thickness of said hub from the axis, said polygonal

hole being averagely formed with several cylindrical-hole portions (6b) each having a diameter slightly larger than the

diagonal line of said polygonal hole (1b);

an axle (2b) which is formed with a polygonal column (4b),

averagely formed with several cylindrical recesses (3b) thereon and slidingly mounted on a tubular axle (5b), to engage with said polygonal hole (1b) of said hub (12b);

and

a pivot axis (11b) passing through the tubular hole of said tubular axle (5b) having a sprocket (9b) for pivotting said axle (2b) and fixed on the vehicle frame.

6. An axle-variating means according to Claim 5 characterised in that said polygonal column 4b is terminated with a disk (8b) retained by a compression spring (7b) inserted between said disk (8b) and said sprocket (9b) terminated on said axle (5b) whereby said polygonal column (4b) is retained by said compression spring (7b) to allow said polygonal column (4b) to engage with said polygonal hole (1b) on said hub (12b) for normal synchronous rotation of hub (12b) with axle, and said polygonal column (4b) may be pulled to disengage from said hub (12b) to allow said cylindrical-hole portion (6b) to rotate freely without being obstructed by said polygonal column (4b) to an eccentric position of said hub around said pivot axis (11b).

7. An axle-variating means according to Claim 5 characterised in that said polygonal column (4b) is formed with a lengthy groove (41b) therein and said tubular axle is formed with a lengthy extension (51b) engaged with said lengthy groove (41b) so that said polygonal column (4b) may be reciprocatively sliding along said tubular axle (5b) for engaging or disengaging said polygonal column (4b)* of said axle (2b) with or from said polygonal hole (1b) of said hub (12b).

8. An axle-variating means according to Claim 5 characterised in that said polygonal hole (1b) is made as an internal gear and said polygonal column (4b) is made as a gear engaged with said internal gear.

FIG.1

FIG.2

FIG.3

FIG.4

0155808

FIG.5

FIG.6

FIG.7

0155808

FIG.8

FIG.9

FIG.10